# EUROPEAN PATENT APPLICATION

(11) **EP 4 579 600 A1**
(43) Date of publication of application: **02.07.2025**
(21) Application number: 23315496.2
(22) Date of filing: 29.12.2023
(51) Int. Cl.: G06T 15/20, G06T 17/00

(54) **A METHOD AND SYSTEM FOR TRAINING A PREDEFINED 3D-FREE-VIEWPOINT MODULE**

(71) Applicant: Check&Visit, 35000 Rennes (FR)
(72) Inventor: ROUCH, Thomas, 35000 RENNES (FR); YBANEZ ZEPEDA, José Alonso, 35000 RENNES (FR); DUCHÊNE, Sylvain, 35000 RENNES (FR)
(74) Representative: Paustian & Partner Patentanwälte mbB

(57) **Abstract**

The invention relates to a computer-implemented method of training a predefined 3D-free-viewpoint module, comprising:
providing a first dataset of 2D images of a 3D indoor scene including for each image 6D-pose information, the indoor scene comprising at least one exterior wall which limits the indoor scene,
generating a virtual panoramic image of an empty space outside the exterior wall,
generating an enhanced first dataset by adding the virtual panoramic image to the first dataset,
training a predefined 3D-free-viewpoint module using the enhanced first dataset.

## Description

### BACKGROUND

Obtaining a 3D (i.e. three dimensional) model, i.e. a digital twin of a real 3D scene, and in particular a 3D-free-viewpoint module, may have various technical purposes. The scene may be e.g. an indoor scene, such as a furnished apartment, or a construction site of a building. Other examples include any kind of 3D (three dimensional) objects (e.g. the interior of the object), such as vehicles. For example, it may be desirable to be able to virtually move in the 3D scene. In other words, it may be desirable to freely choose a 6D-pose of a virtual camera which can be freely positioned in the virtual scene and view the section of the 3D model of the scene in the field of view of said camera.

Moreover, in case several 3D models are established at different points in time, the evolution of the scene may be monitored. For example, it may thus be checked by comparing 3D models of a scene, whether the state of an apartment or a construction has changed.

Conventionally in these sorts of applications, 2D (i.e. two dimensional) image data are obtained with a camera device, for example a smartphone. The 2D image data may comprise single 2D images or a (video) stream of 2D image frames. Typically, a user of the camera device may walk through the scene and simultaneously take several images or a video of different parts of the scene.

Algorithms are known which use a set of images of an indoor scene to reconstruct a 3D representation of the scene where the images were taken. However, such algorithms can suffer from background collapse, creating floating artifacts on the edges or borders of the captured scene. This means that the geometry of objects far from the focus of the used camera device can have a fuzzy geometry.

In view of the above, there is a need to solve such drawbacks and associated disadvantages.

### SUMMARY OF THE DISCLOSURE

A computer-implemented method of training a (e.g. predefined) 3D-free-viewpoint module is provided. The method comprises:
providing a first dataset of 2D images of a 3D indoor scene including for each image 6D-pose information, the indoor scene comprising at least one (e.g. planar) exterior wall which limits the indoor scene,
generating a virtual panoramic image of an empty space outside the exterior wall,
generating an enhanced first dataset by adding the virtual panoramic image to the first dataset,
training a (e.g. predefined) 3D-free-viewpoint module using the enhanced first dataset.

By providing such a method, a 3D-free-viewpoint module may be trained more accurately.

In particular, virtual cameras may be used to add geometric information (i.e. the virtual panoramic image) to an algorithm (i.e. the 3D-free-viewpoint module) that uses a set of images of a scene (i.e. the first dataset of 2D images and desirably the enhanced first dataset) to reconstruct a 3D representation of the scene where the images were taken.

An example of this kind of algorithm is NeRF (Neural Radiance Fields algorithm) that takes as training inputs an image dataset of a scene and the 6D-pose information (6 DOF estimates of the position and orientation) of each image of the dataset.

The training may be such that given a location and viewing direction, a view of the scene at the given location and a depth map of it can be generated. For example, NeRF acquisition typically requires careful choice of near planes for the different camera poses or suffers from background collapse, creating floating artifacts on the edges of the captured scene. This means that the geometry of objects far from the camera's focus (first objects in the scene) have a fuzzy geometry that makes it difficult to see for example the walls in indoor scenes. One exemplary solution of the present disclosure to this problem may be to create a semi-spherical virtual camera and place it behind the known wall of the indoor scene. This virtual camera may carry no information about color or depth. This will make sure that all the information carried by the images looking at the given wall will need to concentrate the resulting geometry on a plane that falls before the virtual camera position.

Accordingly, adding the virtual panoramic image may enforce a geometry of a resulting (3D) data representation or 3D model (predicted by the trained 3D-free-viewpoint module, e.g. NeRF or likewise Gaussian Splatting), as follows:

NeRF training is driven by a Loss function based on input images. Color may be used as depth, but use the alpha channel may be used to specify geometric emptiness. By adding a virtual panoramic camera with e.g. 180° field of view (i.e. the upper half of an equirec) and defining 'There's no nothing to see', NeRF is trained to adjust its weights to make sure there's no opacity on one side of an infinite plane. This allows adding simple geometric constraints to the resulting 3D model of the scene, like limiting the geometry and enforcing that the computed results satisfy the specified limits.

Without this approach of the present disclosure, most of the time the geometry generated by algorithms like Nerf or Gaussian Splatting can generate a pointcloud that goes from the real point in the space to infinite. This resulting pointcloud may be acceptable for applications where the rendering is the only important part of the usage, but in the case of estimating a 3d geometry of the space (i.e. a data representation according to the present disclosure) this makes the results almost unusable.

Providing a first dataset of 2D images may comprise providing 2D (i.e. two dimensional) images, i.e. image data, obtained with a camera device, for example a smartphone. The 2D image data may comprise single 2D images or a (video) stream of 2D image frames. Typically, a user of the camera device may walk through the indoor scene and simultaneously take several images or a video of different parts of the scene.

The images of a first dataset may thus be single images or image frames of a video.

A first dataset may typically comprise only a relatively limited selection of possible 6D-poses within the scene, e.g. in the form of image frames of a walkthrough video of the scene.

A 6D-pose may be defined by 3D-position information and 3D orientation (i.e. 3D-rotational) information, e.g. of a real camera device or of a virtual camera.

The first dataset may comprise for each image frame a relative pose information, the relative pose information indicating the pose change of a camera device from a first image frame to a second image frame. The first dataset may also comprise on-the-fly visual odometry information.

An indoor scene may for example be the interior of a house, an apartment or a manufacturing hall. It is also possible, that an indoor scene may refer to the inside of a truck or ship or vessel of a different kind. Other examples include any kind of 3D (three dimensional) objects (e.g. the interior of the object), such as vehicles.

A (e.g. planar) exterior wall of an indoor scene which limits the indoor scene may for example be the ceiling or the floor wall of a house or apartment. Other examples may comprise a side wall that separates the indoor scene from an exterior scene or environment or other indoor scenes (e.g. other apartments). Hence, the term "exterior" does not necessarily mean that the wall is an exterior wall of a building. The exterior wall may thus comprise or constitute any border of the indoor scene.

Likewise, the term "indoor" does not necessarily mean that the scene is within a closed building. The indoor scene according to the present disclosure may merely require to be bordered by at least one exterior wall or border. The scene may however be open on any other side, e.g. to the top or to another side that that one where the exterior wall or border is located.

A virtual panoramic image may be an image showing a field of view approximating, or greater than, that of the human eye, e.g. 160° to 180°. It may furthermore comprise 6D pose information.

An image of an empty space may be an image, thus a space, where each pixel is void (i.e. no information about color or depth). Thus, a 3D-free-viewpoint module may understand such an image as free space in the scene (i.e. where no objects are located).

A 3D-free-viewpoint module may not generate data, e.g. colors, in an area where the information is void. Thus, a 3D-free-viewpoint module may be prevented during training from placing (or predicting) any objects in such an "empty" area, i.e. an area depicted by the virtual panoramic image as void.

A 3D-free-viewpoint module may train an artificial neural network on a dataset of 2D images and 6D-pose data of the indoor scene to learn predicting the radiance at any 3D position and viewing direction within the indoor scene and represent the scene as a continuous function. The radiance of the indoor scene may be synthesized at any 3D position and viewing direction, even for viewpoints that were not captured in the original set of images, to render a representation of the scene from any viewpoint or camera position using the continuous function.

The method may be at least partially performed using an artificial intelligence (AI) model. In particular, the 3D-free-viewpoint module may use or comprise a machine-learning model or algorithm, e.g. a neural network. However, in some examples, the method, in particular the 3D-free-viewpoint module does not require or have a neural network. For example, the 3D-free-viewpoint module may have or use instead a view-dependent sparse voxel model, e.g. Plenoxel (plenoptic volume element), that can optimize to the same fidelity as e.g. Neural Radiance Fields (NeRFs) without any neural network.

A 3D-free-viewpoint module may be a Neural Radiance Fields (NeRF) algorithm or a Gaussian splatting algorithm (or any other algorithm) adapted to use a dataset of 2D images of a 3D indoor scene as training data and/or to use any geometric or 3D training data.

The 3D-free-viewpoint module may also be referred to as a 6D-free-viewpoint module, as (once trained on a scene) is possible to predicted a view in any 6D-pose in the scene.

Training a 3D-free-viewpoint module may comprise training a deep neural network on a set of 2D images and 6D pose information of the scene. The neural network is designed to predict the radiance and opacity at any 3D position and viewing direction within the scene.

A virtual panoramic image may be generated by a virtual panoramic camera positioned at or outside of the exterior wall such that the virtual panoramic camera is oriented towards the exterior and in a direction of the wall normal such that it views the space outside the exterior wall.

A virtual panoramic camera may for example be positioned on the outside of an exterior wall, e.g. a ceiling. A virtual panoramic camera may also for example be positioned on the outside of an exterior wall with a slight protrusion or distance from said wall. A slight protrusion or distance may for example comprise, e.g. 1 cm to 50 cm, desirably 10 cm (provided the dataset comprises information re. the absolute dimensions of the indoor scene).

A virtual panoramic image may also be generated based on a plurality of virtual perspective images made by respective virtual perspective cameras, which are uniformly distributed across the exterior wall and oriented towards the exterior and in a direction of the wall normal such that they view the space outside the exterior wall.

For example, multiple virtual perspective images made by the respective multiple virtual perspective cameras may be automatically merged into a single virtual panoramic image. Key points or segments in the overlap region of the individual virtual perspective images may be matched to generate the appropriate image warp to fuse images and attain a virtual panoramic image.

Accordingly, the wall according to the present disclosure may have any form (e.g. planar form, a round form or an angled form), because a space on its exterior side can be completely captured by respectively positioning the multiple virtual perspective cameras at the respectively shaped wall. For example, in case the wall has a round (i.e. an indoor scene with a convex exterior wall form a 90° angle), the virtual perspective cameras can be distributed across the wall to capture a space which is larger than 180° (e.g. 270°). Vice versa, in case the wall forms an angle of 90° (i.e. an incision oriented inwards into the indoor scene), the virtual perspective cameras may be positioned along the angle, such that they capture the exterior space spanned by the 90° angle.

The merging of the individual images may be at least partially performed using an artificial intelligence (AI) model.

A virtual panoramic camera may for example be positioned on the outside of an exterior wall, e.g. a ceiling. A virtual panoramic camera may also for example be positioned on the outside of an exterior wall with a slight protrusion or distance from said wall. A slight protrusion or distance may for example comprise 1 cm to 50 cm, desirably 10 cm.

A virtual panoramic image may comprise 6D-pose information, optionally representing the 3D position and viewing direction of the virtual panoramic camera or virtual perspective cameras.

In particular, 6D-pose information of a virtual panoramic image may comprise the position and orientation of the virtual panoramic camera or multiple perspective cameras. Hence, it becomes easily assessable where within or outside of the indoor scene the respective virtual camera or the respective virtual cameras is positioned. The information provided by the virtual panoramic image can thus be combined by the 3D-free-viewpoint module with the initial dataset.

The 6D-pose information of the virtual panoramic image may be determined by:
training an initial predefined 3D-free-viewpoint module using the first dataset;
predicting an initial data representation (or 3D representation) of the scene with the trained 3D-free-viewpoint module;
positioning the at least one virtual panoramic camera and/or plurality of virtual perspective cameras outside or at the exterior wall, and
determining the 6D-pose information based on the 3D position and viewing direction of the virtual panoramic camera and/or a plurality of virtual perspective cameras.

Insofar, a data representation of the indoor scene may be created by an initial trained 3D-free-viewpoint module. This 3D-free-viewpoint module may first be trained with using the first dataset. This data representation may represent an initial digital twin of the scene, wherein an exterior wall may be identified.

Such an identification of an exterior wall may for example be carried out via an algorithm or in particular an artificial neural network. For example, a segmentation and classification algorithm may be used that detects the wall. Then, an initial 3D model of the scene may be generated to detect a bounding box of the indoor scene and the corresponding external walls. After this, the 3D model may be re-generated, now adding the virtual panoramic image(s) on the respective exterior wall(s).

In one example, ceiling plane maybe detected on the data representation (e.g. a pointcloud). Then, a virtual camera may be placed slightly above the ceiling (e.g. 10cm along the normal for instance), centered around the ceiling top view center, aligned with the ceiling plane normal (vertical most of the time). This virtual camera may be the upper-half of a 360 panoramic camera, i.e. looking at the entire space 10 cm above the ceiling. The respective virtual panoramic image of this virtual panoramic camera may be fed into the NeRF algorithm (or other suitable algorithm) during training, defining that this camera sees nothing but empty space. Correspondingly, a similar camera may be placed, but below the floor and oriented downwards.

Once an exterior wall has been identified, a virtual panoramic camera may be positioned at or outside said wall. In particular, a virtual panoramic camera may be positioned outside of said wall with a distance of e.g. 10 cm and oriented with the normal of said wall. Insofar, a virtual panoramic camera positioned and oriented in such a way may capture a virtual panoramic image of the complete surroundings of said exterior wall and thus the surroundings of the indoor scene.

As the virtual panoramic camera is positioned within the initial digital twin of the scene, 6D-pose information of the virtual panoramic camera, i.e. the position and the orientation within the scene, may be determined.

The at least one exterior wall may be a ceiling wall or a floor wall of the indoor scene.

A virtual panoramic camera may comprise a semi-spherical field of view of 180 degrees, e.g. one half of an equirectangular projection.

A virtual panoramic camera may thus comprise a field of view that extends semi-spherically from where the virtual panoramic camera is positioned. If the camera is positioned on one side of a wall facing away from the wall, e.g. aligned with the normal of the wall, the base of the semi-spherical field of view may align with the wall and the semi-spherical field of view may extend into all directions of this side of the wall. Insofar, the panoramic virtual camera does not "see" the wall.

In one example, a method may further comprise:
predicting with the trained 3D-free-viewpoint module further images of the scene for a plurality of further 6D-poses different to the 6D-poses included in the dataset, and
predicting a data representation of the scene by merging the images predicted by the 3D-free-viewpoint module.

The first dataset or desirably the enhanced first dataset may be used to train a 3D-free-viewpoint module, such that the 3D-free-viewpoint module learns to predict further unseen images of the scene i.e. images not included in the dataset.

Accordingly, during the training phase, the 3D-free-viewpoint module may take in a set of input images of a scene from various viewpoints and optimize the weights of the model e.g. neural network parameters to minimize the difference between the rendered images e.g. comprising colored images generated by the network and the actual input images. Once the training is complete, the trained neural network can be used to generate novel views of the scene from any arbitrary viewpoint.

The predicted images may be merged with the (enhanced) first dataset. The thereby obtained dataset may thus be more complete and/or precise, as views from more 6D-poses, that were not included in the (enhanced) first dataset, may be taken into account.

The 3D-free-viewpoint module may be a Neural Radiance Fields (NeRF) algorithm,
optionally adapted to use depth maps as training data (depth maps are only optional, in particular in case algorithms are used as 3D-free-viewpoint module, which do not require depth maps), and/or
the predicted images may comprise depth information and also image radiance information.

Accordingly, the method may merely use 2D images and initial 6D-pose information as input, e.g. generated by a conventional camera device, such as a smart phone. The refined 6D-pose information and/or the depth maps may optionally be derived from the images, as described in more detail below. Alternatively, depth maps may be provided separately to the method.

A Neural Radiance Fields (NeRF) algorithm is a state-of-the-art technique for synthesizing high-quality 3D scenes from a collection of 2D images. The key idea behind NeRF is to use a deep neural network to learn a continuous function that maps from 3D positions and viewing directions to the radiance (color and brightness) of the scene.

The NeRF algorithm typically involves the following steps:
Training: In this step, a deep neural network is trained on a set of 2D images of the scene. The neural network is designed to predict the radiance and opacity at any 3D position and viewing direction within the scene.
Representation: Once the neural network is trained, it can be used to represent the 3D scene as a continuous function. This allows the radiance of the scene to be synthesized at any 3D position and viewing direction, even for viewpoints that were not captured in the original set of images.
Rendering: The continuous function learned by the neural network can be used to render high-quality images of the scene from any viewpoint or camera position.

The NeRF algorithm has several advantages over traditional 3D rendering techniques. For example, NeRF can handle complex lighting and shading effects, and can synthesize high-quality images even from a small number of input images. NeRF can also be used to render scenes with moving objects or changing lighting conditions, making it useful for applications such as virtual reality and augmented reality.

The 3D-free-viewpoint module may perform at least one of:
train an artificial neural network on a dataset of 2D images of a 3D indoor scene including for each image 6D-pose information to learn predicting the radiance at any 3D position and viewing direction within the scene,
represent the scene as a continuous function using the trained network, such that the radiance of the scene can be synthesized at any 3D position and viewing direction, even for viewpoints that were not captured in the original set of images,
optionally render depth maps of the scene from any viewpoint or camera position using the continuous function.

Providing the first dataset may comprise:
providing an initial dataset of 2D images of the scene including initial 6D-pose information for each image,
predicting refined 6D-pose information for each image by inputting the initial dataset into a predefined bundle adjustment module.

An initial 6D-pose information may for example be only estimates with poor or medium accuracy, e.g. noise. Accordingly, the initial 6D-pose information may be less precise and thus be less suitable for the method. Such initial 6D-pose information may be e.g. based on acceleration data of a IMU of a smartphone, i.e. during recording the images. The refinement of the initial 6D-pose information can improve both the quality of the depth maps and the performance of the 3D-free-viewpoint module. Alternatively, the initial 6D-pose information may be estimated a posteriori instead of during recording. For example, a Structure-From-Motion or a SLAM may be run a posteriori based on the images to estimate the initial 6D-pose information.

Accordingly, the method may merely use 2D images and initial 6D-pose information as input, e.g. generated by a conventional camera device, such as a smart phone. The refined 6D-pose information may optionally be derived from the predicted further images, as described in more detail before. Alternatively or additionally, refined 6D-pose information and may be provided separately to the method.

A bundle adjustment module may extract 2D features for each image, match the features among the images in the dataset using a co-visibility estimated from the initial 6D-pose data, and minimize a reprojection error from the positions of these features to generate a refined 6D-pose position data of the scene for each image in the dataset.

The bundle adjustment module may also be referred to as a feature detection, extraction or matching module.

The bundle adjustment module may use or comprise a machine-learning model or algorithm, e.g. a neural network. However, the mentioned feature extraction may also be achieved by the bundle adjustment module using another algorithm than a neural network.

The bundle adjustment module may comprise a deep feature alignment algorithm (e.g. a Pixel-Perfect Structure-from-Motion (PP-SfM) algorithm), which generates a sparse point cloud with feature points. The feature points may in particular represent at least one of: points related to a geometry variation, e.g. intersections between planes (e.g. walls, ceiling, floor), points related to objects boundaries, and/or points with a texture change, pattern, high contrast, etc.

The resulting sparse point cloud may be considered as merely an intermediate result. However, the deep feature alignment algorithm may allow, e.g. by means of the sparse point cloud, to achieve an alignment of the positions of the features as global problem.

Since the on-the-fly visual odometry information only comprises relative 6D-pose information (i.e. from image to image), an absolute 6D-pose calculated based on this relative 6D-pose information may become erroneous, in particular, in case of a relatively large number of images. In other words, the longer the sequence, the bigger the accumulation of error becomes, resulting in a bigger drift. Hence it can be desirable to "close the loop" to refine the 6D-pose information and correct this drift loop closure.

The first dataset may comprise for each image frame a relative pose information, the relative pose information indicating the pose change of a camera device from a first image frame to a second image frame, and/or the dataset may comprises on-the-fly visual odometry information.

For example, in case the camera device is a smartphone, the odometry information may be provided by a e.g. augmented reality (AR) libraries, such as ARCore for Google Android^{®} devices or ARKit libraries for Apple^{®} devices. The 6D-pose information, as described above, may be or may be based on the on-the-fly visual odometry information. The camera device may thus apply a Visual Inertial Odometry (VIO) algorithm.

In one example, a method may further comprise:
predicting a data representation of the scene with the trained 3D-free-viewpoint module.

A data representation (or 3D representation) may be or may comprise at least one of a 3D model, a point cloud, a textured mesh or any other kind of representation of the scene.

Accordingly, a 3D (i.e. three dimensional) model, i.e. a digital twin of a 3D scene, for example an indoor scene, such as a furnished apartment or a construction site of a building, may be obtained and visualized.

Thus, by providing such a method, a data representation may be predicted which represents a precise and reliable model of a real 3D scene.

Such a data representation may be displayed on a display or may be viewed in a VR-environment, i.e. a virtual reality environment. For example, a VR-environment may be configured to allow a user to virtually move in the 3D scene. In other words, it may be desirable to freely choose a 6D-pose of a virtual camera. Thus, a user may virtually inspect a scene, in particular the development of a scene over time. For example, it may thus be checked by comparing 3D models of a scene, whether the state of an apartment or a construction has changed.

Providing the first dataset of 2D images may comprise providing for each image a depth map, wherein the depth maps may be predicted by inputting an initial dataset of 2D images, optionally including the refined 6D-pose information, into a predefined dense depth estimation module.

Accordingly, the method may merely use 2D images and initial 6D-pose information as input, e.g. generated by a conventional camera device, such as a smart phone. The depth maps may optionally be derived from the images, as described in more detail below.

Providing a depth map may comprise a dense depth estimation module and/or carrying out of a dense depth estimation module. A dense depth estimation module may use or comprise a machine-learning model or algorithm, e.g. a neural network.

The dense depth estimation module may comprise or may be a multi-view stereo (MVS) algorithm. An MVS may optionally be configured to estimate depth information based on geometric priors in the images.

The dense depth estimation module may be configured to estimate depth information in the images, e.g. based on geometric priors in the images.

In particular, the dense depth estimation module may estimate depth information of homogenous image areas, e.g. of planes with homogeneous texture. For this purpose, geometric priors in the images, such as planes, may be taken into account by the dense depth estimation module.

The MVS algorithm may be e.g. configured to generate the depth map assuming that the geometry prior takes over during the reconstruction of the planar regions. For example, the MVS algorithm may output a 3D surface map comprising e.g. a surface point cloud or other sort of surface representation representing planar surfaces in the scene.

Accordingly, the depth maps obtained by estimating planar priors can improve the results of the 3D-free-viewpoint module in challenging low contrast areas.

As a consequence, the method can become robust for homogeneous low contrast regions that are assumed to have a geometric prior. A geometric prior may be understood as a predetermined geometric structure, e.g. a plane. In contrast, the 3D-free-viewpoint module (e.g. Nerf) can improve the depth map's precision on high contrast areas. A multi-view stereo algorithm tends to generate blurry depth maps.

The dense depth estimation module may further generate a filtered depth map for each image keeping (only) the 3D information corresponding to homogenous image areas.

The filtered depth maps may be used to train the 3D-free-viewpoint module.

The present disclosure may further relate to a computer program comprising instructions which, when the program is executed by a computer, cause the computer to carry out a method as described above.

In case the method operations may comprise any aspects, e.g. physical, which go beyond a mere data processing, the computer program may further comprise computer-readable instructions which when executed by a data processing system cause any external elements of a system to carry out these operations.

The present disclosure may further relate to a system, comprising:
at least one processor, and
at least one memory storing computer-executable instructions, the computer-executable instructions when executed by the processor cause the computing device to perform a method as described above.

For example, the system may be configured to receive a first dataset of 2D images of a 3D indoor scene from the camera device including for each image 6D-pose information, the indoor scene comprising at least one exterior wall which limits the indoor scene, generating a virtual panoramic image of an empty space outside the exterior wall, generating an enhanced first dataset by adding the virtual panoramic image to the first dataset, training a predefined 3D-free-viewpoint module using the enhanced first dataset.

The processor (or processing unit) may be a component of electronic devices that may be responsible for carrying out computational tasks. There may be different types of processing units, each designed for specific purposes. A processing unit may be or may comprise a Central Processing Unit (CPU), Graphics Processing Unit (GPU), Digital Signal Processor (DSP), Field-Programmable Gate Array (FPGA), and/or Application-Specific Integrated Circuit (ASIC). The CPU may be the primary processing unit in a computer that may be responsible for executing most of the instructions and calculations required by the computer. GPUs may be specialized processing units that may be designed to handle the complex calculations required for rendering graphics and video. DSPs may be specialized processing units that may handle signal processing tasks, while FPGAs may be reconfigurable processing units that may be programmed to perform various computational tasks. ASICs may be customized processing units designed to perform a specific set of tasks, optionally making them highly efficient and effective for their intended purpose. The method according to the present disclosure may also run on a virtual server.

The system may also comprise or be connectable with a camera device, e.g. a smartphone, as described above.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 schematically shows a method of training a predefined 3D-free-viewpoint module.
Fig. 2 shows a schematic drawing of a system 100 according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

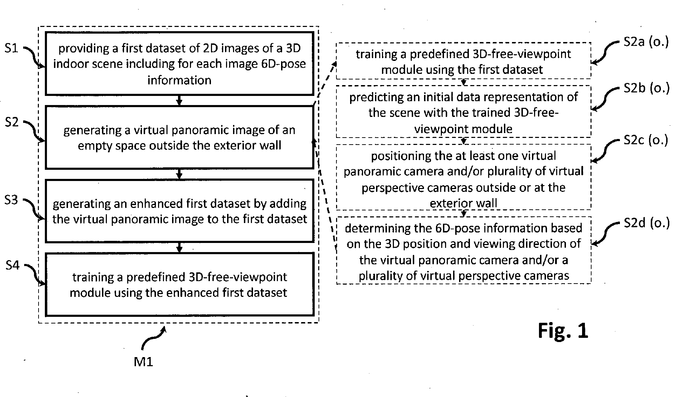

Fig. 1 schematically shows an exemplary method M1 of training a predefined 3D-free-viewpoint module.

In step S1 a first dataset of 2D images of a 3D indoor scene is provided. Furthermore, 6D-pose information is provided for each image.

The indoor scene comprises at least one exterior wall which limits the indoor scene, e.g. a ceiling of an indoor apartment.

For example, the first dataset may comprise for each image frame a relative pose information, the relative pose information indicating the pose change of a camera device from a first image frame to a second image frame.

The first dataset may comprise on-the-fly visual odometry information. For example, in case the camera device is a smartphone, the odometry information may be provided by a e.g. augmented reality (AR) libraries, such as ARCore for Google Android^{®} devices or ARKit libraries for Apple^{®} devices. The initial 6D-pose information, as described above, may be or may be based on the on-the-fly visual odometry information. The camera device may thus apply a Visual Inertial Odometry (VIO) algorithm. Alternatively, the method, e.g. the bundle adjustment module may comprise a VIO algorithm.

In step S2, a virtual panoramic image of an empty space outside the exterior wall is generated. The virtual panoramic image may optionally comprise 6D-pose information, optionally representing the 3D position and viewing direction of the virtual panoramic camera or virtual perspective cameras.

A virtual panoramic image may be an image showing a field of view approximating, or greater than, that of the human eye, e.g. 160° to 180°. It may furthermore comprise 6D pose information. An image of an empty space may be an image, thus a space, where each pixel is void. Thus, a 3D-free-viewpoint module may understand such an image as free space in the scene.

A virtual panoramic image may be generated by a virtual panoramic camera positioned at or outside of the exterior wall such that the virtual panoramic camera is oriented towards the exterior and in a direction of the wall normal such that it views the space outside the exterior wall. A virtual panoramic camera may for example be positioned on the outside of an exterior wall, e.g. a ceiling. A virtual panoramic camera may also for example be positioned on the outside of an exterior wall with a slight protrusion or distance from said wall. A slight protrusion or distance may for example comprise 1 cm to 50 cm, desirably 10 cm.

A 3D-free-viewpoint module will not generate data, e.g. colors, in an area where the information is void. Thus, a 3D-free-viewpoint module will not place data in the area depicted by the virtual panoramic image as void.

In step S3, an enhanced first dataset is generated by adding the virtual panoramic image to the first dataset.

The merging of the individual images may be at least partially performed using an artificial intelligence (AI) model.

In step S4, a predefined 3D-free-viewpoint module is trained using the enhanced first dataset.

A 3D-free-viewpoint module may train an artificial neural network on a dataset of 2D images and 6D-pose data of the indoor scene to learn predicting the radiance at any 3D position and viewing direction within the indoor scene and represent the scene as a continuous function. The radiance of the indoor scene may be synthesized at any 3D position and viewing direction, even for viewpoints that were not captured in the original set of images, to render a representation of the scene from any viewpoint or camera position using the continuous function.

Optionally, steps S2a, S2b, S2c, and S2d may for example be carried out in between step S1 and step S2 or may be part of step S2. The steps S2a to S2d may serve to determine the 6D-pose information of the virtual panoramic image. Based on this 6D-pose information the virtual panoramic image can be positioned in the initial data representation.

In optional step S2a, an initial predefined 3D-free-viewpoint module is trained using the first dataset.

In optional step S2b, an initial data representation of the scene, e.g. a point cloud, is predicted with the trained 3D-free-viewpoint module.

Insofar, a data representation of the indoor scene may be created by an initial trained 3D-free-viewpoint module. This 3D-free-viewpoint module may first be trained with using the first dataset. This data representation may represent an initial digital twin of the scene, wherein an exterior wall may be identified. Such an identification of an exterior wall may for example be carried out via an algorithm or in particular an artificial neural network.

In optional step S2c, at least one virtual panoramic camera and/or a plurality of virtual perspective cameras is positioned outside or at the exterior wall.

A virtual panoramic camera may be positioned at or outside said wall. In particular, a virtual panoramic camera may be positioned outside of said wall with a distance of e.g. 10 cm and oriented with the normal of said wall. Insofar, a virtual panoramic camera positioned and oriented in such a way may capture a virtual panoramic image of the complete surroundings of said exterior wall and thus the surroundings of the indoor scene.

In optional Step S2d, the 6D-pose information is determined based on the 3D position and viewing direction of the virtual panoramic camera and/or a plurality of virtual perspective cameras.

In particular, 6D-pose information of a virtual panoramic image may comprise the position and orientation of the virtual panoramic camera or multiple perspective cameras. Hence, it becomes easily assessable where within or outside of the indoor scene the respective virtual camera or the respective virtual cameras is positioned. The information provided by the virtual panoramic image can thus be combined by the 3D-free-viewpoint module with the initial dataset.

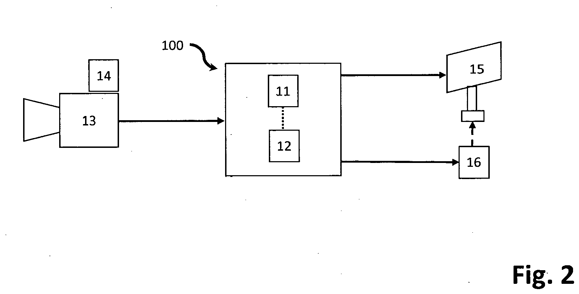

Fig. 2 shows a schematic drawing of a system 100 according to examples of the present disclosure. The system 100 may be configured to carry out a method according to the present disclosure, e.g. a method of training a predefined 3D-free-viewpoint module

The system 100 may comprise:
- at least one processor 11,
- at least one memory 12 storing computer-executable instructions, the computer-executable instructions when executed by the processor cause the computing device to perform a method as described above.

The system 100 may further comprise or be configured to be connectable to:
- a camera device 13, for example a smartphone, tablet or other type of device comprising a digital camera,
- one or several acceleration sensors 14, e.g. in the form of an IMU (inertial measurement unit),
- a display device 15, and
- a data storage device 16.

In its most basic configuration, the system 100 typically includes at least one processor 11 and a memory 12. In one example, the processor 11 and the memory 12 may be incorporated into the system 100 such as depicted in fig. 2, or may be a computer or computer communicatively linked thereto. Depending on the exact configuration and type of computing device, the memory 12 may be volatile (such as RAM), non-volatile (such as RAM, flash memory, etc.), or some combination of the two. Further, the system 100 may also include data storage devices 16 (removable and/or non-removable) including, but not limited to, magnetic or optical disks or tape. Similarly, but not depicted in fig. 2, the system 100 may also comprise input device(s) such as keyboard, mouse, pen, voice input, etc. and/or output device(s) such as a display, speakers, printer, etc. Also included in the environment may be one or more communication connections, such as LAN, WAN, point to point, etc. In embodiments, the connections may be operable to facility point-to-point communications, connection-oriented communications, connectionless communications, etc.

The system 100 may typically include at least some form of computer readable media. Computer readable media can be any available media that can be accessed by the processor 11 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media does not include communication media.

Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, microwave, and other wireless media. Combinations of the any of the above should also be included within the scope of computer readable media.

The system 100 may be a single computer operating in a networked environment using logical connections to one or more remote computers. The remote computer may be a personal computer, a server, a router, a network PC, a peer device or other common network node, and typically includes many or all of the elements described above as well as others not so mentioned. The logical connections may include any method supported by available communications media. Such networking environments are commonplace in offices, enterprise-wide computer networks, intranets and the Internet.

For example, the system 100 may be configured to receive a first dataset of 2D images of a 3D indoor scene from the camera device including for each image 6D-pose information, the indoor scene comprising at least one exterior wall which limits the indoor scene, generating a virtual panoramic image of an empty space outside the exterior wall, generating an enhanced first dataset by adding the virtual panoramic image to the first dataset, training a predefined 3D-free-viewpoint module using the enhanced, first dataset.

The acceleration sensor 14 may be part of the camera device 13, or may be external thereto. The acceleration sensor 14 may be configured to obtain the acceleration sensor data, based on which the camera device 13 and/or the system 100 may determine the 6D-pose information.

A data representation may constitute a 3D model of the scene, which may be at least partially displayed, e.g. at least different views in the scene, on the display device 15.

Accordingly, a 3D model, i.e. a digital twin of a 3D scene, for example an indoor scene, such as a furnished apartment or a construction site of a building, may be obtained and visualized by the system 100. For example, the system 100 may be configured to allow a user of the system 100 to virtually move in the 3D scene. In other words, it may be desirable to freely choose a 6D-pose of a virtual camera.

A data representation and/or the respective 3D model of the scene may also be stored on the data storage device 16. It is also possible, that data representations and/or the respective 3D models are generated by the system at different time points and each of these is stored on the data storage device 16. Accordingly, an evolution of the scene may be derived or monitored based on a comparison of these stored data stored. For example, it may thus be checked by comparing 3D models of a scene, whether the state of an apartment or a construction has changed.

According to a further example, the system 100 may have an architecture, wherein
- the system comprises or is associated with a data acquisition device, e.g. a smartphone or other camera device,
- data obtained by the data acquisition device may be stored in a network connected device e.g. a server,
- a network connected device may trigger another computation device that receives the data and performs all or a part of the required computations of the method of the present disclosure, wherein each algorithm may e.g. run independently on an optimized device and may be triggered when the previous device finished the processing of the data,
- the results may be stored on the network,
- the final 3D representation may be accessed by a different device like a smartphone or computer.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

The terms "record" and "receive" may be used synonymously throughout this disclosure unless denoted differently.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A computer-implemented method of training a predefined 3D-free-viewpoint module, comprising:
providing a first dataset of 2D images of a 3D indoor scene including for each image 6D-pose information, the indoor scene comprising at least one exterior wall which limits the indoor scene,
generating a virtual panoramic image of an empty space outside the exterior wall,
generating an enhanced first dataset by adding the virtual panoramic image to the first dataset,
training a predefined 3D-free-viewpoint module using the enhanced first dataset.

2. The method of claim 1, wherein
the virtual panoramic image is generated by a virtual panoramic camera positioned at or outside of the exterior wall such that the virtual panoramic camera is oriented towards the exterior and in a direction of the wall normal such that it views the space outside the exterior wall.

3. The method according to claim 1,
the virtual panoramic image is generated based on a plurality of virtual perspective images made by respective virtual perspective cameras, which are
uniformly distributed across the exterior wall and oriented towards the exterior and in a direction of the wall normal such that they view the space outside the exterior wall.

4. The method according to one of the preceding claims, wherein
the virtual panoramic image comprises 6D-pose information, optionally representing the 3D position and viewing direction of the virtual panoramic camera or virtual perspective cameras.

5. The method according to the preceding claim, wherein
the 6D-pose information of the virtual panoramic image is determined by:
training an initial predefined 3D-free-viewpoint module using the first dataset predicting an initial data representation of the scene with the trained 3D-free-viewpoint module;
positioning the at least one virtual panoramic camera and/or plurality of virtual perspective cameras outside or at the exterior wall, and
determining the 6D-pose information based on the 3D position and viewing direction of the virtual panoramic camera and/or a plurality of virtual perspective cameras.

6. The method according to one of the preceding claims, wherein
the at least one exterior wall is a ceiling wall or a floor wall of the indoor scene.

7. The method according to one of the preceding claims 2 to 6, wherein
the virtual panoramic camera comprises a semi-spherical field of view of 180 degrees, e.g. one half of an equirectangular projection.

8. The method according to one of the preceding claims, the method further comprising:
predicting with the trained 3D-free-viewpoint module further images of the scene for a plurality of further 6D-poses different to the 6D-poses included in the dataset, and
predicting a data representation of the scene by merging the images predicted by the 3D-free-viewpoint module.

9. The method according to one of the preceding claims, wherein
the 3D-free-viewpoint module is a Neural Radiance Fields (NeRF) algorithm or a Gaussian splatting algorithm, optionally adapted to use depth maps as training data, and/or
the predicted images comprise depth information and also image radiance information.

10. The method according to one of the preceding claims, wherein
the 3D-free-viewpoint module performs at least one of:
train an artificial neural network on a dataset of 2D images of a 3D indoor scene including for each image 6D-pose information to learn predicting the radiance at any 3D position and viewing direction within the scene,
represent the scene as a continuous function using the trained network, such that the radiance of the scene can be synthesized at any 3D position and viewing direction, even for viewpoints that were not captured in the original set of images,
optionally render depth maps of the scene from any viewpoint or camera position using the continuous function.

11. The method according to one of the preceding claims, wherein providing the first dataset comprises:
providing an initial dataset of 2D images of the scene including initial 6D-pose information for each image,
predicting refined 6D-pose information for each image by inputting the initial dataset into a predefined bundle adjustment module.

12. The method according to one of the preceding claims, wherein
the first dataset comprises for each image frame a relative pose information, the relative pose information indicating the pose change of a camera device from a first image frame to a second image frame, and/or
the dataset comprises on-the-fly visual odometry information.

13. The method according to one of the preceding claims, wherein
providing the first dataset of 2D images comprises providing for each image a depth map, wherein
the depth maps are predicted by inputting an initial dataset of 2D images, optionally including the refined 6D-pose information, into a predefined dense depth estimation module.

14. A computer program comprising instructions which, when the program is executed by a computer, cause the computer to carry out a method according to any one of the preceding method claims.

15. A system (100), comprising:
at least one processor (11), and
at least one memory (12) storing computer-executable instructions, the computer-executable instructions when executed by the processor cause the computing device to perform a method according to any one of the preceding claims.
